# EUROPEAN PATENT APPLICATION

(11) **EP 2 988 202 A1**
(43) Date of publication of application: **24.02.2016**
(21) Application number: 15181744.2
(22) Date of filing: 20.08.2015
(51) Int. Cl.: G06F 3/0488, G06F 3/041, G06F 3/044, G06F 3/046, G06F 3/0482, G06F 3/0484, G06F 3/0354

(54) **ELECTRONIC DEVICE AND METHOD FOR PROVIDING INPUT INTERFACE**

(30) Priority: 22.08.2014 KR 20140109481
(71) Applicant: Samsung Electronics Co., Ltd., Gyeonggi-do 16677 (KR)
(72) Inventor: Kim, Namhoi, 16677 Gyeonggi-do (KR); Choi, Minki, 16677 Gyeonggi-do (KR); Ahn, Dale, 16677 Gyeonggi-do (KR)
(74) Representative: Nederlandsch Octrooibureau

(57) **Abstract**

An electronic device is provided. The electronic device includes a touch screen configured to receive a first input signal and a second input signal based on different input methods, and a control module configured to control the touch screen to display an event item related to an attribute of electronic pen if the first input signal is continued for more than a predetermined time, and display a function related to the event item based on the second input signal if the second input signal is received while the display of event item and the first input signal are being continued.

## Description

### TECHNICAL FIELD

The present disclosure relates to an electronic device and a method for providing an input interface by using at least two types of input information generated by different input methods.

### BACKGROUND

Recently, electronic devices such as a mobile equipment mainly utilize an input method of touching or approaching a screen by using a user's finger or an electronic pen. Such a touch screen input method is widely used for electronic devices such as a smartphone, mobile phone, notebook computer, or tablet personal computer (PC).

Further, the touch screen input method is performed by input means such as a user's gesture or an electronic pen. For example, the input method may identify a contact or proximity of an electronic pen on a touch screen. The gesture or input using an electronic pen is utilized in a convergence form through various combinations.

As various input methods of electronic device are developed, executing a specific function becomes complicated. Therefore, as input methods become complicated, accessibility and usability of electronic device decreases.

Accordingly, accessibility to a specific function must be improved by providing an intuitive method for a hand-based input and electronic-pen-based input.

Further, as the electronic-pen-based input method is more frequently used, easier input methods must be developed for specific applications.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above mentioned problems and/or disadvantages and to provide at least the advantages described below. Accordingly, an aspect of the present disclosure is to provide an electronic device and a method for providing an easier and intuitive input interface.

In accordance with an aspect of the present disclosure, an electronic device is provided. The electronic device includes a touch screen configured to receive a first input signal and a second input signal based on different input methods, and a controller configured to control the touch screen to display an event item related to an attribute of electronic pen if the first input signal is continued for more than a predetermined time and display a function related to the event item based on the second input signal if the second input signal is received while the display of event item and the first input signal are being continued.

In accordance with another aspect of the present disclosure, a method for providing an input interface is provided. The method includes receiving a first input signal, displaying an event item related to an attribute of electronic pen in a touch screen if the first input signal is received for more than a predetermined time, receiving a second input signal after the first input signal is received for more than the predetermined time, and displaying a function related to the event item in response to the received second input signal. Here, the first input signal and the second input signal may be received in different input methods.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to an embodiment of the present disclosure;
FIG. 2 is a block diagram of a control module according to an embodiment of the present disclosure;
FIG. 3 is a flowchart illustrating a method for providing an input interface in an electronic device according to an embodiment of the present disclosure;
FIG. 4 is a flowchart illustrating a method for providing an input interface in an electronic device according to an embodiment of the present disclosure;
FIG. 5 is a flowchart illustrating a method for preventing a malfunction of input interface in an electronic device according to an embodiment of the present disclosure;
FIGS. 6A and 6B are example screens illustrating operations of FIG. 5;
FIG. 7 is a flowchart illustrating a method for preventing a malfunction of input interface in an electronic device according to an embodiment of the present disclosure;
FIGS. 8A and 8B are example screens illustrating operations of FIG. 7;
FIG. 9 is a flowchart illustrating a method for providing an input interface in an electronic device according to an embodiment of the present disclosure;
FIG. 10 is an example screen illustrating operations of FIG. 9;
FIG. 11 is a flowchart illustrating a method for providing an input interface in an electronic device according to an embodiment of the present disclosure;
FIGS. 12A, 12B, 12C, and 12D are example screens illustrating operations of FIG. 11;
FIG. 13 is a flowchart illustrating a method for providing an input interface in an electronic device according to an embodiment of the present disclosure; and
FIGS. 14A, 14B, 14C, 14D, 14E, and 14F are examples screens illustrating operations of FIG. 13.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present as defined by the appended claims and their equivalents.disclosure is provided for illustration purpose only and not for the purpose of limiting the present disclosureembodiments of the present various . Accordingly, it should be apparent to those skilled in the art that the following description of disclosure

It is to be understood that the singular forms "a," "an," and "the" include plural referents unless the context clearly dictates otherwise. Thus, for example, reference to "a component surface" includes reference to one or more of such surfaces.

To avoid obscuring the subject matter of the present disclosure, some components in the accompanying drawings are emphasized, omitted, or schematically illustrated, and the size of each component does not fully reflect the actual size. Therefore, the present disclosure is not limited to the relative sizes and distances illustrated in the accompanying drawings.

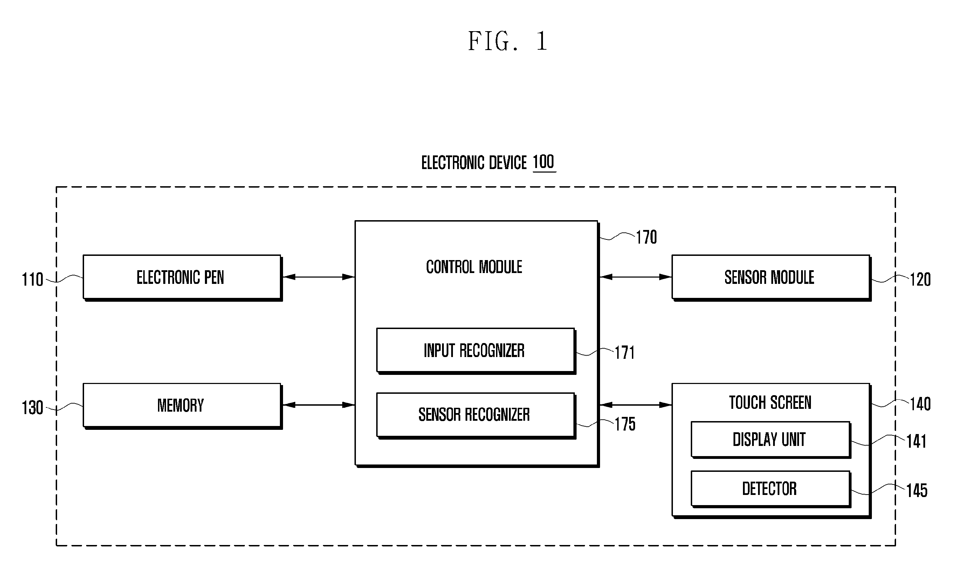

FIG. 1 is a block diagram of an electronic device 100 according to an embodiment of the present disclosure.

Referring to FIG. 1, the electronic device 100 may include an electronic pen 110, sensor module 120, memory 130, touch screen 140, and control module 170. The electronic pen 110 is shown to be included in the electronic device 100, however the present disclosure is not limited to this. For example, the electronic pen 110 may be a separate device provided by another electronic device.

The electronic pen 110 may be an input tool in a pen shape that is configured to input various signals for using the electronic device 100. The electronic pen 110 can input a signal on a digitizer (not shown), and may include a coil and a resonant circuit (LC circuit). The coil can generate an electric current from a magnetic field formed in the digitizer and transmit the generated electric current to a capacitor. The capacitor can be charged with the transmitted electric current and discharge the electric current through the coil. Accordingly, a magnetic field is formed in the coil and the formed magnetic field can be detected by the digitizer.

The electronic pen 110 may be a passive type using a passive element (for example, surface acoustic wave (SAW) device). For example, the electronic pen 110 can receive a radio frequency (RF) signal from the electronic device 100 through an antenna. The electronic pen 110 can transmit an echo signal to the electronic device 100 after receiving the received wireless signal for a predetermined time in the passive element. The electronic pen 110 can transmit an echo signal having the same frequency with the received wireless signal to the electronic device 100 through an antenna, or transmit an echo signal to the electronic device 100 through an antenna by changing at least one of a frequency, amplitude, and phase. The electronic pen 110 can provide the electronic device 100 with state information such as a pressure applied to the electronic pen 110 (pen pressure) or a button input through the echo signal having at least one of a changed frequency, changed altitude, and changed phase.

The electronic pen 110 may utilize an electromagnetic resonance method using an LC circuit or a passive method using a passive element; however, the present disclosure is not limited to these methods. Namely, the electronic pen 110 used in the present disclosure can use various methods besides the electromagnetic resonance method and passive method.

According to an embodiment of the present disclosure, the electronic pen 110 may enable transmission of an input signal of the electronic device 100. For example, the electronic pen 110 may include at least one physical button. The electronic device 100 can receive a specific input signal based on at least one operation of pressing/releasing the button and holding the button for a predetermined time after an input. The specific input signal can be a signal different from a touch or hovering input signal of the electronic pen 110. The electronic device 100 can identify a signal combined with a touch or hovering input signal and function buttons input signal of the electronic pen 110 as a new input signal. For example, the electronic device 100 can distinguish between an input signal generated by contacting the electronic pen 110 on the touch screen 140 and an input signal generated by contacting the electronic pen 110 onto the touch screen 140 while pressing the function button.

According to an embodiment of the present disclosure, the electronic pen 110 may include at least one sensor (not shown) configured to measure at least one of an inclination of the electronic pen 110, a movement speed of the electronic pen 110, and a distance between the electronic pen 110 and the touch screen 140. For example, the sensor could be disposed in the sensor module 120 or may be implemented by the detector 145. The at least one sensor may include a 2-axis or 3-axis acceleration sensor, or 2-axis or 3-axis gyro sensor. The above types of sensor are examples, and the present disclosure is not limited to the above types of sensor. For example, any well-known component may be used if the component can measure an inclination of the electronic pen 110, the movement speed of the electronic pen 110, or the distance between the electronic pen 110 and the touch screen 140. The sensor for measuring the an inclination of the electronic pen 110, movement speed of the electronic pen 110, or distance between the electronic pen 110 and the touch screen 140 may be included in one of the electronic pen 110 and electronic device 100, or in both of them.

The sensor module 120 may include other sensors (not shown) that can measure a physical quantity or detect an operation state of the electronic device 100, and convert the measured or detected information to an electric signal. The sensor module 120 may include at least one of a gesture sensor, gyro sensor, atmospheric pressure sensor, magnetic sensor, acceleration sensor, grip sensor, proximity sensor, color sensor (for example, red, green, blue (RGB) sensor), biometric sensor, temperature/humidity sensor, illumination sensor, and ultra violet (UV) sensor. Additionally or alternatively, the sensor module 120 may include an E-nose sensor (not shown), electromyography (EMG) sensor (not shown), electroencephalogram (EEG) sensor (not shown), electrocardiogram (ECG) sensor (not shown), infrared ray (IR) sensor (not shown), iris sensor (not shown), or fingerprint sensor (not shown). The sensor module 120 may further include a control circuit to control at least one sensor included in the sensor module 120.

According to an embodiment of the present disclosure, the sensor module 120 can receive information such as an electric current change and radio wave change generated by the electronic pen 110, or a pressure change of the electronic pen 110 on the touch screen 140. The sensor module 120 can transmit the received information to the control module 170. The control module 170 can identify an inclination of the electronic pen 110, location of the electronic pen 110 projecting to the touch screen 140, movement speed of the electronic pen 110, or distance between the electronic pen 110 and touch screen 140 based on the information received from the sensor module 120.

According to an embodiment of the present disclosure, if a user grips the electronic device 100, the sensor module 120 can receive information such as a location of hand gripping the electronic device 100 or a pressure through a grip sensor or pressure sensor. The sensor module 120 can transmit the received information to the control module 170. The control module 170 can determine whether a hand gripping the electronic device 100 is the right hand or left hand of the user based on the information received from the sensor module 120.

According to an embodiment of the present disclosure, when a finger or electronic pen 110 approaches the touch screen 140 (i.e., hovering), the sensor module 120 can identify various operations of finger or electronic pen 110 including a touch based on changes of capacitance or electric current generated by a user's finger or electronic pen 110. For this, the sensor module 120 can utilize various sensors such as a gesture sensor or gyro sensor.

The memory 130 can store a command and data received from the control module 170 or other components (for example, electronic pen 110, sensor module 120, and touch screen 140). The memory 130 may include programming modules for an application such as a kernel, middleware, and application programming interface (API). Each programming module may be configured with at least one of software, firmware, hardware, or their combinations. For example, the control module 170 may be configured with hardware including a processor, circuit module, semiconductor, or system on chip (SOC) and software including application programs, or with firmware combing them.

According to an embodiment of the present disclosure, the memory 130 can store an event item to be displayed in the touch screen 140 according to a touch input signal or an electronic-pen-based input signal. For example, the event item may be a menu in various user interface (UI) forms related to the electronic pen 110 such as an electronic pen setting menu. Further, the event item may be a menu frequently used in a specific application.

According to an embodiment of the present disclosure, the memory 130 can store routine information of various functions which can be executed in a system or specific application according to the hand-based input or electronic-pen-based input signal. For example, the electronic device 100 can store routine information in the memory 130 corresponding to at least one of a first input signal, second input signal, and additional signal. Further, a specific application stored in the memory 130 may include various functions corresponding to combinations of hand-based input signal and electronic-pen-based input signal. Various functions can be predetermined by an application designer or user of the electronic device 100.

The touch screen 140 is an input/output device for simultaneously providing an input function and a display function, and may include a display unit 141 and a detector 145. The display unit 141 can display various screens related to the operation of user device, such as media contents playback screen, setting screen of the electronic pen 110, or application executing screen used by the electronic pen 110. The touch screen 140 can receive a touch input signal or an electronic-pen-based input signal from the detector 145 while a screen is displayed in the display unit 141, and transmit the received input signal to the control module 170. The control module 170 can identify a hand-based input signal or electronic-pen-based input signal based on the received input signal, and execute a function related to the input signal by calling routine information stored in the memory 130 according to identified input signals. The touch screen 140 may be formed with a liquid crystal display (LCD) or organic light emitting diode (OLED), and included in an input means.

The display unit 141 can display (i.e., output) information processed by the electronic device 100. For example, when the electronic device 100 is in an electronic pen input mode, the display unit 141 can display a UI or graphical UI (GUI) related to a function of electronic pen 110.

The detector 145 may be formed with combinations of a first touch panel for identifying a touch input or a proximity touch input that is generated by a user's finger and a second touch panel for identifying a touch input or a proximity touch input that is generated by the electronic pen 110. The first touch panel and second touch panel may be configured in integral form. The first touch panel and second touch panel may be formed in a capacitive type, resistive overlay type, ultrasonic type, infrared type, or electromagnetic induction type. The touch input indicates a contact between an input tool (for example, electronic pen 110 or finger) and the touch screen 140, and the proximity touch input means an approach of input tools to the touch screen 140 within a predetermined distance (i.e., the hovering state).

The detector 145 can detect contact or non-contact input on the touch screen 140 input (for example, touch-based long press) input, touch-based short press input, single-touch-based input, multi-touch-based input, touch-based gesture, or hovering input.

According to an embodiment of the present disclosure, if a hand-based input or electronic-pen-based input is detected from the touch screen 140, the detector 145 can detect coordinates of input event generation and transmit the detected coordinates to the control module 170. The control module 170 can perform a function corresponding to an area where a hand-based input or electronic-pen-based input generated according to a signal received from the detector 145.

According to an embodiment of the present disclosure, the detector 145 can convert a pressure applied to a specific area of the touch screen 140 or capacitance change generated in a specific area to an electric signal. The detector 145 can detect the location and area of touch and a touch pressure corresponding to a touch method.

According to an embodiment of the present disclosure, the detector 145 may include a controller (not shown). The detector 145 can receive a touch input signal or electronic-pen-based input signal and transmit the received signal to the controller (not shown). The controller can transmit the received signal to the control module 170 after processing data. The control module 170 can identify the area of the touch screen 140 where the input signal is generated.

The control module 170 can control general operations of the electronic device 100 and signal flows between internal components of the electronic device 100, and perform a data processing function. The control module 170 may be configured with a central processing unit (CPU) or application processor (AP). The control module 170 according to the present disclosure can identify a touch input and electronic-pen-based input, and perform various functions based on the identified touch input and electronic-pen-based input.

According to an embodiment of the present disclosure, the control module 170 can receive a first input signal from a user through the detector 145 of touch screen 140. If the received first input signal is maintained for more than a predetermined time, the control module 170 can call an event item from the memory 130 and transmit the event item to the display unit 141 of touch screen 140. If a second input signal is received while also receiving the first input signal, the control module 170 can perform a function corresponding to the received second input signal. The function being performed may be a function related to a displayed event item.

According to an embodiment of the present disclosure, the first input signal may be a touch input signal, and the second input signal may be an electronic-pen-based input signal.

According to an embodiment of the present disclosure, if a user grips the electronic device 100, the control module 170 can identify whether a hand gripping the electronic device 100 is the right hand or left hand. The electronic device 100 can identify the hand gripping the electronic device 100 and grip information received according to the grip of the electronic device 100. The grip information may include information such as a hand or finger gripping the electronic device 100 or a gripping area. For this, the control module 170 can identify whether the gripping hand is the right hand or left hand through the touch screen 140. For example, the electronic device 100 can receive grip information through a touch screen 140 of capacitive type. Further, the control module 170 can receive related information from at least one sensor including a grip sensor. The control module 170 can receive grip information in various methods.

For example, the electronic device 100 can include at least one grip sensor at the right, left, upper, or lower side of the electronic device 100. As another example, the electronic device 100 may include more than one grip sensor at an edge of the electronic device 100. According to gripping of the electronic device 100, the electronic device 100 can receive grip information from the grip sensor located at the edge where a user's hand is located.

According to an embodiment of the present disclosure, electronic device 100 can identify the right hand or left hand by identifying the shape of user's finger displayed on the touch screen 140. In more detail, if the electronic device 100 is gripped by the left hand, the control module 170 can analyze the shape of area detected by a contact or non-contact approach in the touch screen 140. For example, the control module 170 can identify the gripping hand by identifying whether the mostly detected area through the touch screen 140 is located at the right side or left side from the center line of the touch screen 140.

If the grip information is received, the control module 170 can control the touch screen 140 to receive a first input signal only in area an adjacent to the touch screen 140 where the grip information is received.

For example, if the electronic device 100 is gripped by the left hand, the electronic device 100 may receive a first input signal only from a specific left area based on the center line of the touch screen 140. If the electronic device 100 is gripped by the left hand, the specific left area may be a physical area where a user's left thumb can touch the electronic device 100. The area can be set by a user or designer. The electronic device 100 can prevent a touch input by other fingers (for example, index finger, middle finger, or ring finger) except the specific finger (for example, thumb) by controlling the specific area of the touch screen 140. By this, the electronic device 100 can prevent an unintended input or operation.

According to an embodiment of the present disclosure, the control module 170 can receive a hovering input signal of the electronic pen 110, and activate reception of first input signal only while the hovering input signal of the electronic pen 110 is maintained. The control module 170 can control the touch screen 140 to receive a first input signal only while touch input and electronic-pen-based input are maintained so that an unintended operation is not performed due to an unintended input.

According to an embodiment of the present disclosure, if the first input signal is received for more than a predetermined time, the control module 170 can control the touch screen 140 to display an event item related to an attribute of electronic pen 110. The event item related to the attribute of electronic pen 110 may include UI menus in various forms including information such as a type of electronic pen 110, color, or thickness. For example, the event item related to the attribute of electronic pen 110 may include UI menus in various forms including setting information of the electronic pen 110. Further, the attribute of electronic pen 110 may include the attribute directly related to the electronic pen 110 and various functions displayable in an application using the electronic pen 110. For example, the event item related to the attribute of electronic pen 110 may include a UI menu for displaying a function of inserting or capturing an image by using the electronic pen 110.

If a second input signal is received while the first input signal is received for more than a predetermined time (for example, while a user maintains the first input signal), the control module 170 can control the touch screen 140 to display at least one function displayed in the event item. For example, if a touch and hold input is received for more than a predetermined time as the first input signal, the control module 170 can control to display a setting menu of the electronic pen 110. If an input signal of the electronic pen 110 is received as the second input signal while the first input signal is maintained, the control module 170 can change a pen tool displayed in a pen setting menu.

Although not shown in FIG. 1, the electronic device 100 may include additional elements such as, for example, a bus, input/output interface, communication interface, network, subscriber identification module (SIM) card, slot, camera module, indicator, motor, electric power control module, or battery. According to an embodiment of the present disclosure, the electronic device 100 or electronic pen 110 may include a communication module. The electronic device 100 can receive various information from the electronic pen 110 connected through the communication module. The electronic device 100 can identify a location, inclination, and speed of the electronic pen 110 from the received information.

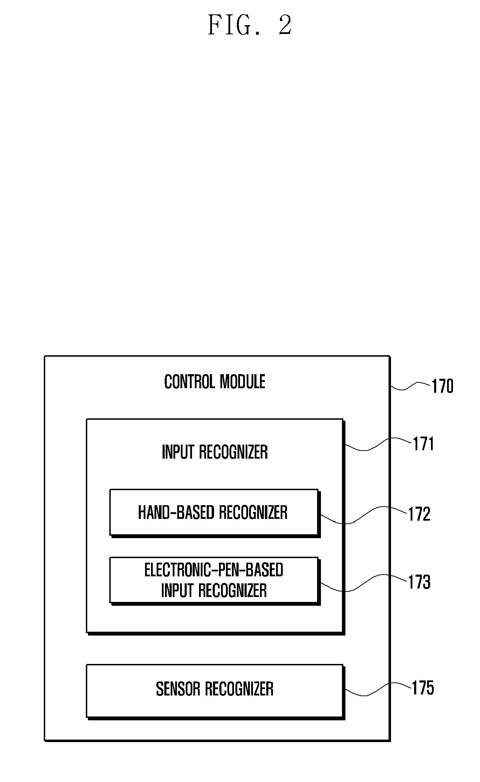

FIG. 2 is a block diagram of control module according to an embodiment of the present disclosure.

Referring to FIG. 2, according to an embodiment of the present disclosure, the control module 170 may include an input recognizer 171 and a sensor recognizer 175. The input recognizer 171 may include a hand-based input recognizer 172 for recognizing touch input and an electronic-pen-based input recognizer 173. The hand-based input recognizer 172 may be electrically connected to a first touch panel of the touch screen detector 145, and the electronic-pen-based input recognizer 173 may be electrically connected to a second touch panel of the touch screen detector 145. The sensor recognizer 175 can receive sensor information from the sensor module 120 by connecting to the sensor module 120. Further, the sensor recognizer 175 can receive information such as an electric current change, capacitance change, and pressure change from the electronic pen 110. The control module 170 can receive a touch input signal and electronic-pen-based input signal through the input recognizer 171 and sensor recognizer 175.

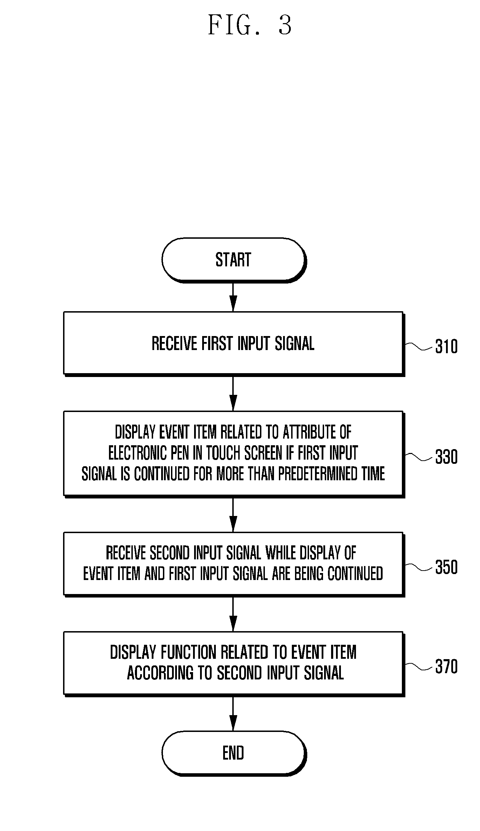

FIG. 3 is a flowchart illustrating a method for providing an input interface in an electronic device according to an embodiment of the present disclosure.

Referring to FIG. 3, according to an embodiment of the present disclosure, the electronic device 100 receives a first input signal from a user at operation 310.

According to an embodiment of the present disclosure, the first input signal may be a touch input signal or electronic-pen-based input signal. The touch input signal may be a touch input signal, proximity touch input signal, or various gesture input signal using a user's finger. The electronic-pen-based input signal may be a touch input signal, proximity touch input signal, or various gesture input signal using an input tool like an electronic pen 110.

According to an embodiment of the present disclosure, if the first input signal is received for more than a predetermined time, the electronic device 100 displays an event item related to an attribute of electronic pen 110 in the touch screen 140 at operation 330.

According to an embodiment of the present disclosure, the electronic device 100 can display the event item in an area proximate to the location where the first input signal is received.

For example, the electronic device 100 can receive a finger touch input signal from the touch screen 140, and identify whether the received touch input is maintained for more than a predetermined time. The predetermined time may be set manually by a designer or user of the electronic device 100, manually or automatically in an application program, or manually or automatically in an electronic device system. The electronic device 100 can store the set time in the memory 130 according to various embodiments of the present disclosure.

The electronic device 100 can count a time period from when a touch input signal or electronic-pen-based input signal is firstly received by using clock information such as a system clock until the reception of the signal stops. The electronic device 100 can display a predetermined event item if the counted time period matches a predetermined time stored in the memory 130. The predetermined event item may include a system related to a pen attribute or an application menu. For example, the predetermined event item may be a setting menu for the electronic pen 110 performed in a specific application. Further, the predetermined event item may be a UI menu related to the pen attribute with which a function frequently used in a specific application by a user can be set.

According to an embodiment of the present disclosure, the electronic device 100 can automatically set an event item related to a function that is frequently used in a specific application by a user. The frequently used function may be a menu related to an attribute of electronic pen 110. The electronic device 100 can count the number of menus related to the function used in the specific application, and the counting information can be stored in the memory 130. If the first input signal is maintained for more than a predetermined time, the electronic device 100 can display by setting the most frequently counted information among the counting information as an event item. The most frequently counted information may be stored in the memory 130 by updating every time when the application is executed.

According to an embodiment of the present disclosure, electronic device 100 can receive an event item to be displayed manually from a user, and the received event item can be stored in the memory 130 or in a cache memory.

According to an embodiment of the present disclosure, the event item may be a UI menu including electronic pen setting information. The electronic pen setting information may relate to usage of the electronic pen 110 in a specific application. For example, the electronic pen setting information may include pen tools such as a pencil, brush, ball-point pen, highlighter, or eraser.

According to an embodiment of the present disclosure, the event item may include an insertion window for calling a picture or video in an application using an electronic pen.

According to an embodiment of the present disclosure, the event item may include a function window for changing a magnification of text or image. The event item according to various embodiments of the preset disclosure may include various UI items, icons, emoticons, graphs, maps, and tables according to a specific application.

According to an embodiment of the present disclosure, while the display of event item and input of first input signal are continued, the electronic device 100 receives a second input signal from a user at operation 350. The second input signal may be a touch input signal or electronic-pen-based input signal. The first input signal and second input signal may be input signals generated in different input method. For example, the first input signal and second input signal may be generated respectively by selecting from a capacitive type using a capacitance change and an electromagnetic induction type using a magnetic field change. Namely, the first input signal may be generated by selecting from a capacitive type or electromagnetic induction type, and the second input signal may be generated by differently selecting the capacitive type or electromagnetic induction type against the first input signal.

According to an embodiment of the present disclosure, at least one of the first input signal and second input signal may be an electronic-pen-based input signal. The electronic device 100 can display an event item corresponding to the first input signal, receive a second input signal while the reception of first input signal is maintained.

For example, the electronic device 100 can receive a touch input of electronic pen 110 from a user while displaying a UI menu for electronic pen setting according to a touch and hold signal received from the user (i.e., while receiving and maintaining the first input signal).

According to an embodiment of the present disclosure, the electronic device 100 displays a function related to the event item based on the received second input signal at operation 370.

The event item and related function according to an embodiment of the present disclosure may be selected from an electronic-pen-based setting menu displayed through the event item. For example, the electronic device 100 can change a setting value of electronic pen 110 by selecting one from the electronic-pen-based setting menu based on the received second input signal.

In case of event item displaying a UI menu for setting the electronic pen 110, the event item and related function according to an embodiment of the present disclosure may change the UI menu according to the second input signal.

In case of event item displaying a partial area of UI menu for setting the electronic pen 110, the event item related function according to an embodiment of the present disclosure may display the remaining area of UI menu not shown in the touch screen 140 according to the second input signal.

The event item and related function according to an embodiment of the present disclosure may include function such as a toggling method, or changing the UI menu for setting the electronic pen 110 to another UI menu according to the second input signal.

According to an embodiment of the present disclosure, the first input signal and second input signal may be different input signals each other which are selected from a touch input signal and electronic-pen-based input signal. For example, if the first input signal is a touch input signal, the second input signal may be an electronic-pen-based input signal. Adversely, if first input signal is an electronic-pen-based input signal, the second input signal may be a touch input signal.

According to various embodiments of the present disclosure, a function frequently used in a specific application can be intuitively and speedily executed by using a touch input and electronic-pen-based input.

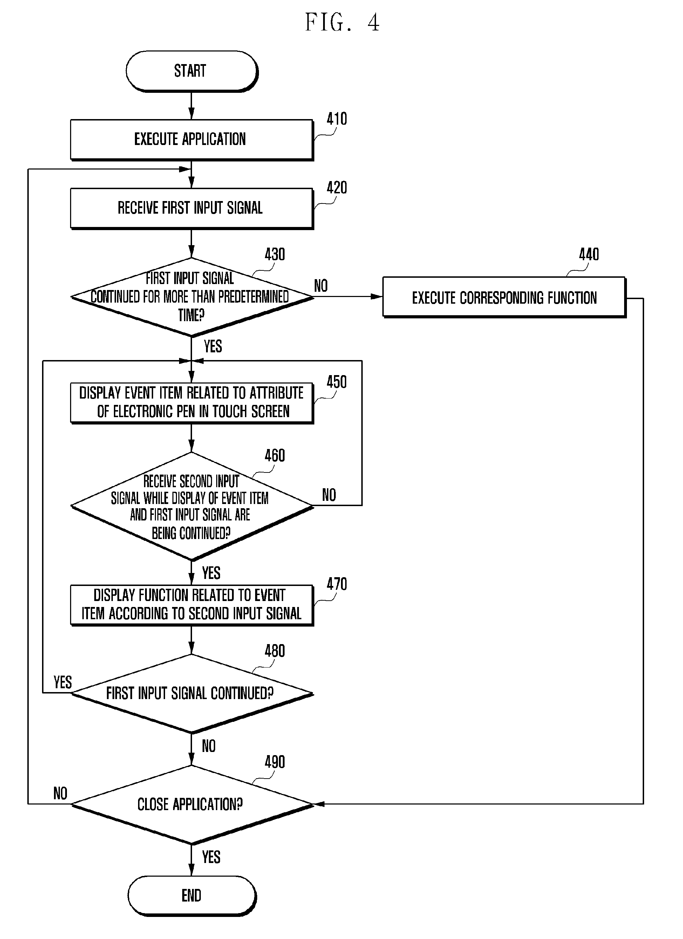

FIG. 4 is a flowchart illustrating a method for providing an input interface in an electronic device according to an embodiment of the present disclosure.

Referring to FIG. 4, according to an embodiment of the present disclosure, the electronic device 100 executes an application at operation 410. The application may include various applications usable by the electronic pen 110.

According to an embodiment of the present disclosure, the electronic device 100 receives a first input signal at operation 420. The first input signal may be a touch input signal or an electronic-pen-based input signal.

According to an embodiment of the present disclosure, the electronic device 100 identifies whether the first input signal is continuously received for more than a predetermined time at operation 430. Namely, the electronic device 100 can identify a touch and hold input where the first input signal is maintained for more than a predetermined time.

If the first input signal is not received for more than the predetermined time, the electronic device 100 performs a function corresponding to the input signal at operation 440. For example, the electronic device 100 can perform a function of changing a display of touch point in an application related to the electronic pen 110. After performing the corresponding function, the electronic device 100 proceeds to operation 490 and receives a user input for closing the application.

If the first input signal is received for more than the predetermined time, the electronic device 100 displays an event item corresponding to the first input signal in the touch screen at operation 450. For example, if a touch input signal by a user is maintained for more than a predetermined time, the electronic device 100 can display an electronic pen setting menu.

According to an embodiment of the present disclosure, the electronic device 100 identifies whether a second input signal is received from the user while the display of event item and the first input signal are continued at operation 460. For example, the electronic device 100 can identify whether a second input signal is received from the user while the first input signal is maintained. The second input signal may be a touch input signal or electronic-pen-based input signal. At least one of the first input signal and second input signal may be an electronic-pen-based input signal. If the first input signal is not maintained for a predetermined time or the second input signal is not received from the user, the electronic device 100 returns to operation 450 and continues to display the event item.

If the second input signal is received from the user while maintaining the first input signal, the electronic device 100 performs a function related to the event item according to the second input signal at operation 470.

According to an embodiment of the present disclosure, the electronic device 100 identifies whether the first input signal is continued at operation 480. For example, the electronic device 100 can identify whether the first input signal is continued after performing a function according to the second input signal. If the first input signal is continued, the electronic device 100 proceeds to operation 450 and continues to display the event item.

If the first input signal is not continued, the electronic device 100 receives a user input to determine to close the corresponding application at operation 490. If the application is not to close, the electronic device 100 proceeds back to operation 420 and receives the first input signal again from the user. If the application is determined to close, the electronic device 100 can close the corresponding application.

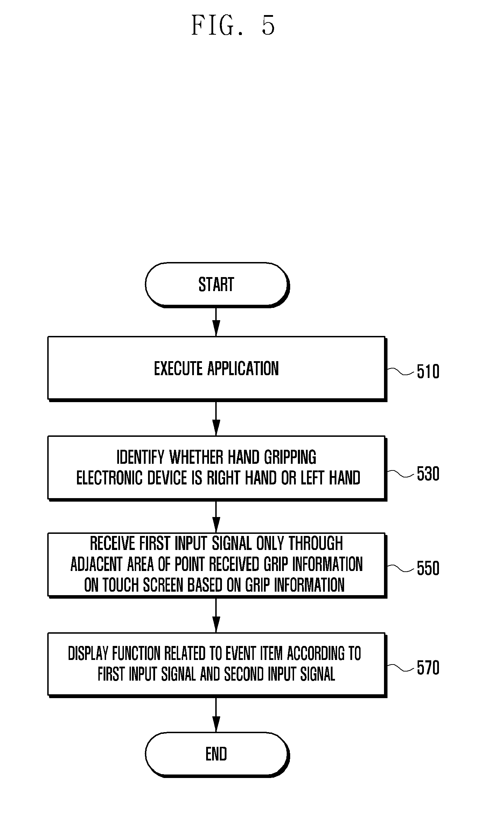

FIG. 5 is a flowchart illustrating a method for preventing a malfunction of input interface in an electronic device according to an embodiment of the present disclosure.

Referring to FIG. 5, according to an embodiment of the present disclosure, the electronic device 100 executes an application at operation 510. The application may include various application usable by the electronic pen 110.

Further, the application may include a function of enabling/disabling a malfunction protection mode to operate the malfunction protection mode according to the embodiment of the present disclosure.

According to an embodiment of the present disclosure, if the user grips the electronic device 100, the electronic device 100 identifies whether a hand gripping the electronic device 100 is the right hand or left hand at operation 530. For example, the electronic device 100 can identify whether a hand gripping the electronic device 100 is the right hand or left hand by using a touch screen 140, grip sensor, pressure sensor, or proximity sensor. Further, according to the decided hand, the electronic device 100 can receive grip information of area where the electronic device 100 is gripped.

According to an embodiment of the present disclosure, the electronic device 100 receives a first input signal only in an area proximate to the point where the grip information is received on the touch screen 140 at operation 550.

For example, if the hand gripping the electronic device 100 is the left hand, the electronic device 100 can control the touch screen 140 to activate a touch input only from a predetermined area where a user's left thumb touches. The predetermined area may be set manually or automatically by a designer or user of the electronic device 100. The electronic device 100 can control the touch screen 140 to deactivate a touch input from the remaining area. By this, the electronic device 100 can prevent unintended execution of function due to a touch of other fingers such as an index finger, middle finger, ring finger, and little finger.

According to an embodiment of the present disclosure, the electronic device 100 displays a function related to the event item according to the first input signal and second input signal at operation 570.

According to the embodiment of the present disclosure, the first input signal may be a touch input, and the second input signal may be an electronic-pen-based input signal.

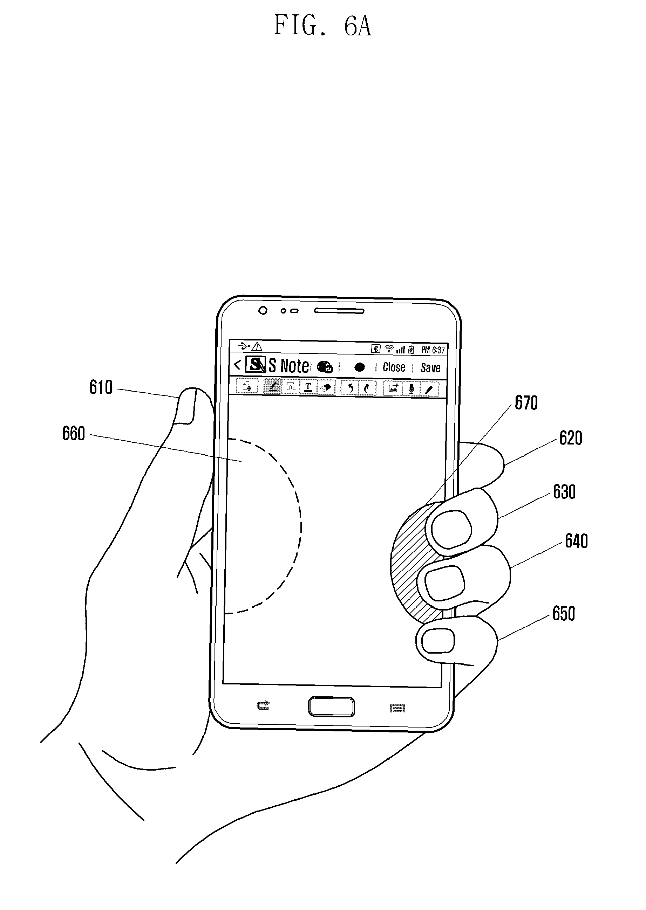

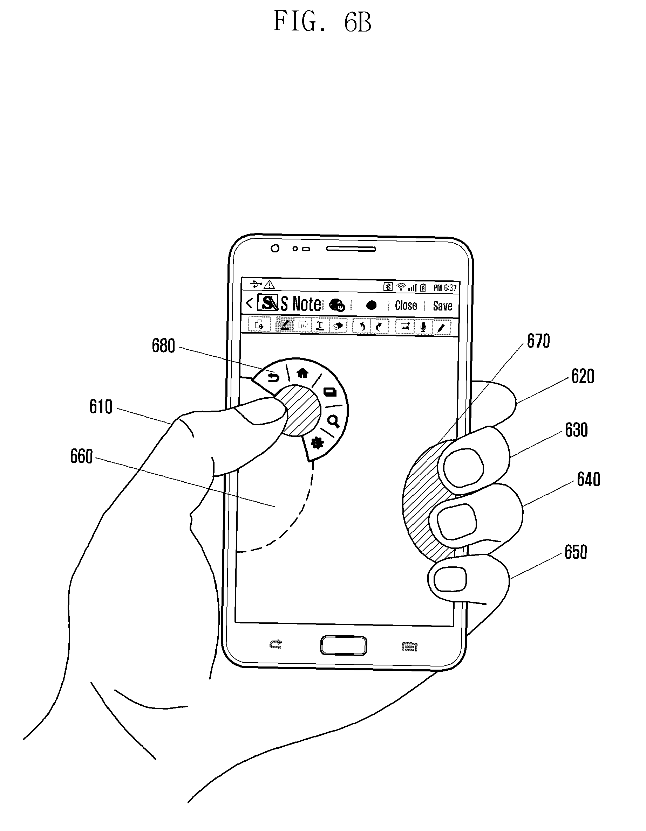

FIGS. 6A and 6B are example screens illustrating operations of FIG. 5.

Referring to FIG. 6A, a user grips the electronic device 100 in the left hand and user fingers 610,620,630,640, and 650 are located on the electronic device 100. The electronic device is executing an application for using an electronic pen 110.

The electronic device 100 identifies that the user's left hand is gripping the electronic device 100 by using the sensor module 120, and identifies a touch of user's finger 610 only in a predetermined active area 660. Although the user's fingers 630 and 640 currently touch a partial inactive area 670, the electronic device 100 doesn't recognize the touch of user's fingers as a first input signal. Accordingly, the electronic device 100 doesn't display an event item.

Referring to FIG. 6B, the user's finger 610 touches the active area 660 while gripping the electronic device 100. Because the user's finger 610 touched the active area 660, the electronic device 100 can identify the touch as a first input signal. If the user's finger 610 touches the active area 660 for more than a predetermined time, the electronic device 100 can display an event item 680 in the touch screen 140.

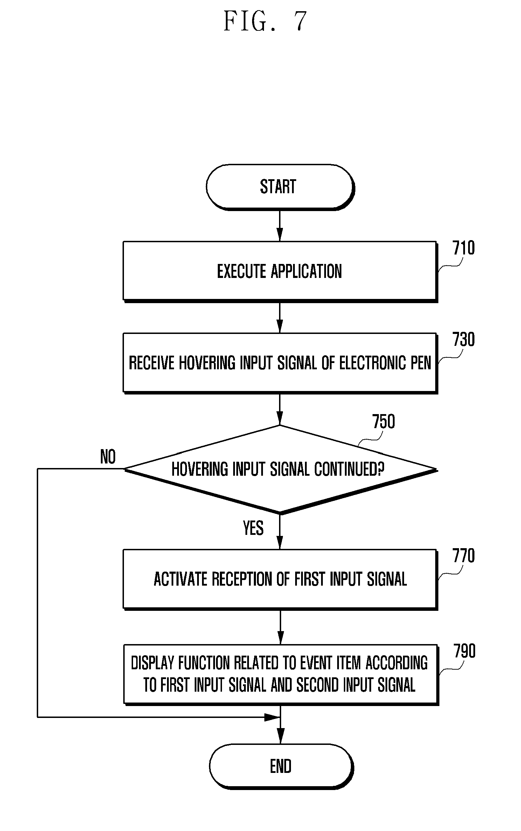

FIG. 7 is a flowchart illustrating a method for preventing a malfunction of input interface in an electronic device according to an embodiment of the present disclosure.

Referring to FIG. 7, according to an embodiment of the present disclosure, the electronic device 100 executes an application at operation 710. The application may include various application usable by the electronic pen 110. Further, the application may include a function of enabling/disabling a malfunction protection mode to operate the malfunction protection mode according to the embodiment of the present disclosure.

According to an embodiment of the present disclosure, the electronic device 100 receives a hovering input signal of electronic pen 110 at operation 730. The hovering input signal of electronic pen 110 may include a first input signal, second input signal, and additional input signals. The hovering input signal of electronic pen 110 may be an input signal based on an electromagnetic induction method.

According to an embodiment of the present disclosure, the electronic device 100 identifies whether the hovering input signal is continued at operation 750. In order to prevent a malfunction in an input interface according to the present disclosure, the electronic device 100 can control the touch screen 140 to activate a first input signal only when the hovering input of electronic pen 110 is maintained. If the hovering input signal is not maintained, the operations of the embodiment may terminate.

If the hovering input signal of electronic pen 110 is maintained, the electronic device 100 activates reception of first input signal at operation 770. If an event item is displayed by receiving and maintaining the first input signal for more than a predetermined time, the electronic device 100 can receive a second input signal even though the hovering input is no more maintained. For example, if the event item is displayed, the electronic device 100 can perform the following operations as shown in FIG. 3 or 4.

According to an embodiment of the present disclosure, the electronic device 100 displays a function related to the event item according to the first input signal and second input signal at operation 790.

According to an embodiment of the present disclosure, the first input signal may be a touch input signal, and the second input signal may be an electronic-pen-based input signal.

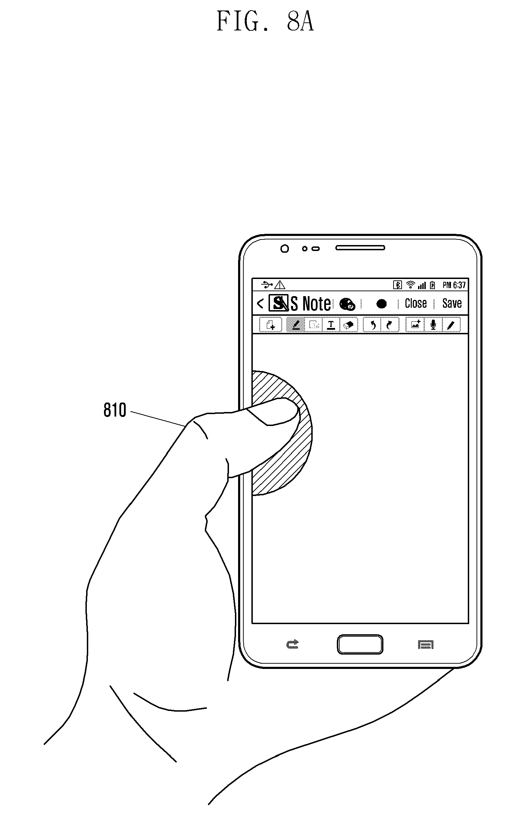

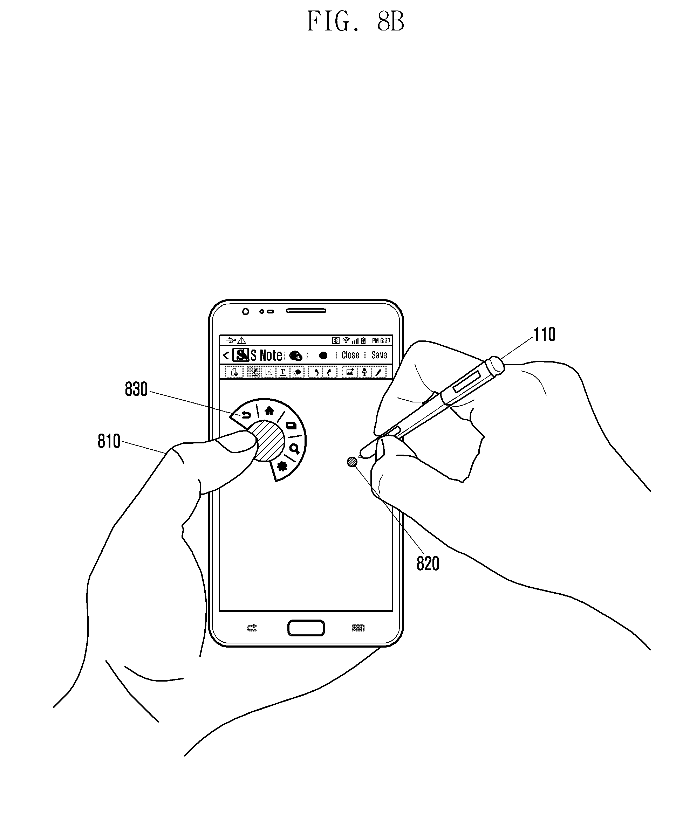

FIGS. 8A and 8B are example screens illustrating operations of FIG. 7.

Referring to FIG. 8A, the electronic device 100 is executing an application usable by the electronic pen 110 application. Although a user's finger 810 touches the touch screen 140 of electronic device 100, the electronic device 100 doesn't recognize the touch signal as a first input signal because a hovering input of the electronic pen 110 is not received.

Referring to FIG. 8B, the user's left hand touches a partial area of the touch screen 140 while the electronic pen 110 held by the user's right hand maintains a hovering input in a partial area of the touch screen 140. The electronic device 100 can inform the user that hovering input is maintained by displaying a hovering point 820 in a partial area where the electronic pen 110 is projected onto the touch screen 140.

Because the hovering input of electronic pen 110 is maintained, the electronic device 100 can receive a first input signal (touch input of user's left hand). If the touch input is maintained for more than a predetermined time, the electronic device 100 displays an event item 830.

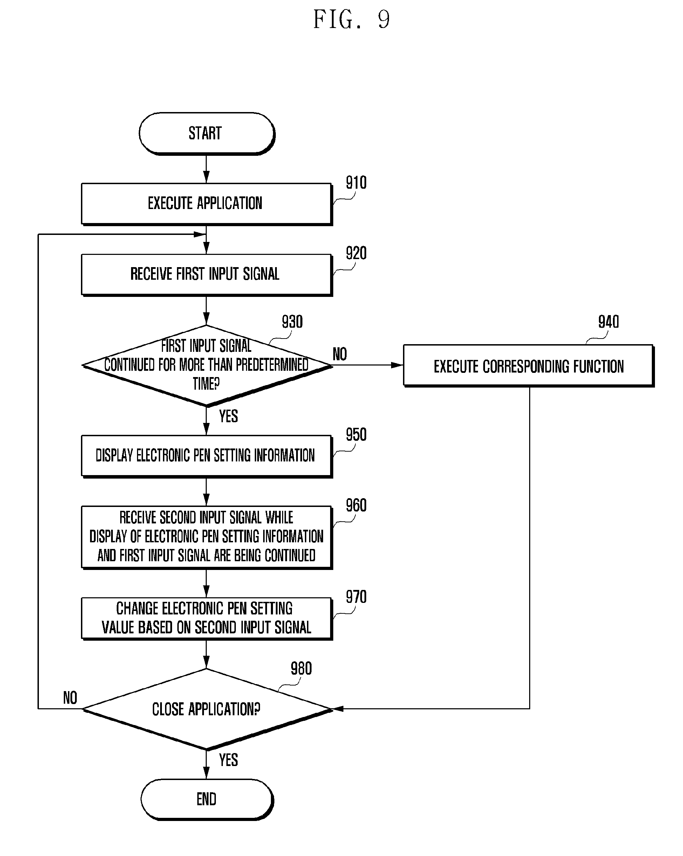

FIG. 9 is a flowchart illustrating a method for providing an input interface in an electronic device according to an embodiment of the present disclosure.

Referring to FIG. 9, according to an embodiment of the present disclosure, the electronic device 100 executes an application at operation 910. The application may include various applications usable in conjunction with the electronic pen 110.

According to an embodiment of the present disclosure, the electronic device 100 receives a first input signal at operation 920. For example, the electronic device 100 can receive a touch input signal from a user.

According to an embodiment of the present disclosure, the electronic device 100 identifies whether the reception of first input signal is continued for more than a predetermined time at operation 930. For example, the electronic device 100 can identify a touch and hold input of which the received first input signal is maintained for more than a predetermined time.

If the received first input signal is not maintained for more than the predetermined time at operation 930, the electronic device 100 performs a function corresponding to the input signal at operation 940. For example, the electronic device 100 can change a display of touch point in an electronic-pen-based application. The electronic device 100 may receive an input for closing the application from the user after performing the corresponding function at operation 980.

If the received first input signal is maintained for more than the predetermined time at operation 930, the electronic device 100 displays electronic pen setting information in the touch screen 140 at operation 950.

According to an embodiment of the present disclosure, the electronic device 100 receives a second input signal while the display of electronic-pen setting information and the first input signal are continued at operation 960. Namely, when the electronic-pen setting information is displayed and the first input signal is continued, the electronic device 100 can receive a second input signal from the user. The second input signal may be an electronic-pen-based input signal.

According to an embodiment of the present disclosure, the electronic device 100 changes an electronic pen setting value based on the received second input signal at operation 970.

According to an embodiment of the present disclosure, the electronic device 100 may receive a user input to close the corresponding application at operation 980. If the closing of corresponding application is not determined, the electronic device 100 proceeds back to operation 920 and receives the first input signal again from the user. If the closing of corresponding application is determined, the electronic device 100 can close the corresponding application.

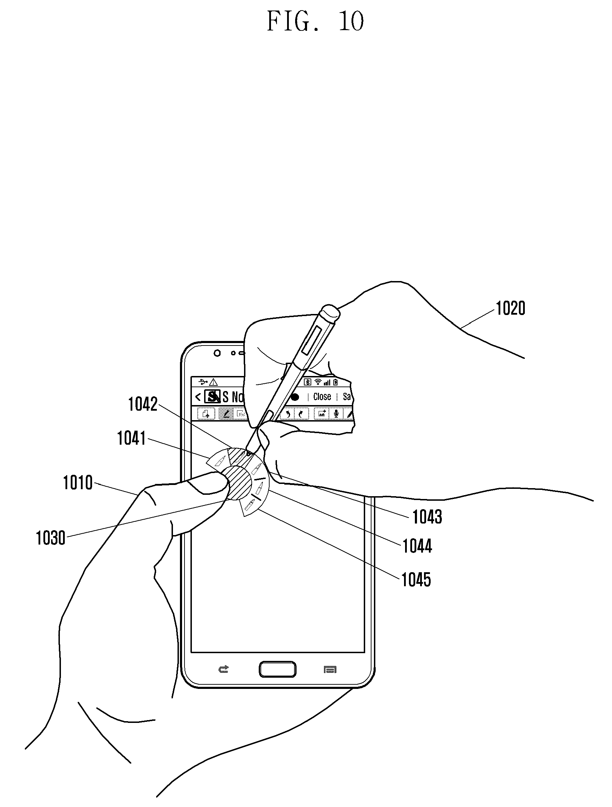

FIG. 10 is an example screen illustrating operations of FIG. 9.

Referring to FIG. 10, the electronic device 100 is executing application in conjunction with the electronic pen 110. The electronic device 100 receives a first input signal from a user's finger 1010. If the user's touch input is maintained for more than a predetermined time, the electronic device 100 displays electronic pen setting information 1030. The electronic pen setting information 1030 may include at least one of pen tools 1041, 1042, 1043, 1044, and 1045.

The electronic device 100 receives a touch input of electronic pen 110 while the touch input signal (first input signal) by the user's left finger 1010 is maintained. The electronic pen 110 operates while being held by a user's fingers 1020. The touch input of electronic pen 110 is an input for using at least pen tool 1042 in the electronic pen setting information 1030. Accordingly, the user can intuitively and rapidly change the pen tool by combining a touch input and electronic-pen-based touch input in an electronic-pen-based application.

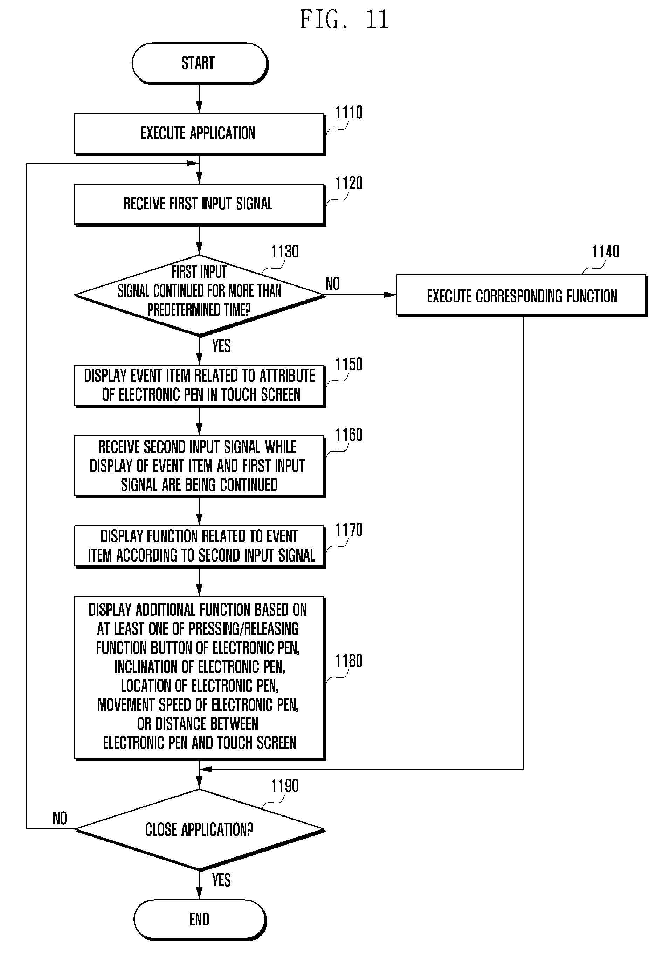

FIG. 11 is a flowchart illustrating a method for providing an input interface in an electronic device according to an embodiment of the present disclosure.

Referring to FIG. 11, according to an embodiment of the present disclosure, the electronic device 100 executes an application at operation 1110. The application may include various applications usable by the electronic pen 110.

According to an embodiment of the present disclosure, the electronic device 100 receives a first input signal at operation 1120. The first input signal may be a touch input signal or an electronic-pen-based input signal.

According to an embodiment of the present disclosure, the electronic device 100 identifies whether the received first input signal is maintained for more than a predetermined time at operation 1130. For example, electronic device 100 can identify a touch and hold input of which the received first input signal is maintained for more than a predetermined time.

If the received first input signal is not maintained for more than the predetermined time at operation 1130, the electronic device 100 performs a function corresponding to the input signal at operation 1140. For example, the electronic device 100 can perform a function of changing a display of touch point in an electronic-pen-based application. The electronic device 100 receives an input for closing the application from a user after performing the corresponding function, at operation 1190.

If the received first input signal is maintained for more than the predetermined time at operation 1130, the electronic device 100 displays an event item in the touch screen 140 corresponding to the first input signal at operation 1150. Namely, if a touch input signal is received from the user and maintained for more than a predetermined time, the electronic device 100 can display an electronic pen setting menu.

According to an embodiment of the present disclosure, the electronic device 100 receives a second input signal from the user while the display of event item and the first input signal are maintained at operation 1160. The second input signal may be a touch input signal or electronic-pen-based input signal.

According to an embodiment of the present disclosure, the electronic device 100 displays a function related to the event item according to the second input signal at operation 1170. For example, the electronic device 100 can select a pen tool from an electronic pen tool menu displayed according to the first input signal.

According to an embodiment of the present disclosure, the electronic device 100 displays an additional function based on the information such as pressing/releasing a function button of electronic pen 110, inclination of electronic pen 110, location of electronic pen 110, movement speed of electronic pen 110, or distance between the electronic pen 110 and touch screen 140 at operation 1180.

The electronic device 100 can identify an electric signal changing according to the pressing/releasing a function button of electronic pen 110, and the identified electric signal itself or an electric signal combined with another input signal can be identified as a new input signal.

The location of electronic pen 110 may include a point where the electronic pen 110 touches the touch screen 140 or the electronic pen 110 hovers over the touch screen 140. The electronic device 100 can identify the location of electronic pen 110 based on the information received from the sensor module 120 or from the electronic pen 110 through a communication module.

The movement speed of electronic pen 110 may include information such as a speed or acceleration of electronic pen 110 moving on the touch screen 140. The electronic device 100 can identify a speed or acceleration of the electronic pen 110 by calculating location information of electronic pen 110 at every moment (displacement information). Further, the electronic device 100 can identify the speed of electronic pen 110 based on the information received from the electronic pen through a communication module. For this, the electronic pen 110 may include a separate sensor module such as an acceleration sensor.

The distance between the electronic pen 110 and touch screen 140 may be a relative distance of which the electronic pen 110 hovers over the touch screen 140. For this, the electronic device 100 can identify the distance between the electronic pen 110 and the touch screen 140 by using a sensor module 120 including a proximity sensor. As another example, the electronic device 100 can identify the distance between the electronic pen 110 and the touch screen 140 based on the intensity of electric signal received from the electronic pen 110.

The electronic device 100 can display a function (for example, a function of changing a pen tool) related to an event item according to the second input signal, and additional function according to an additional input. The additional input may include pressing/releasing a function button of electronic pen 110, inclination of electronic pen 110, location of electronic pen 110, movement speed of electronic pen 110, or distance between electronic pen 110 and touch screen 140. The additional function may include functions of changing a pen color after selecting a pen tool, changing a pen tool menu, and changing a magnification of text or image.

According to an embodiment of the present disclosure, the electronic device 100 receives a user input to determine closing of the application at operation 1190. If the closing of the application is not determined, the electronic device 100 proceeds back to operation 1120 and receives the first input signal from the user. If the closing of the application is determined, the electronic device 100 can close the corresponding application.

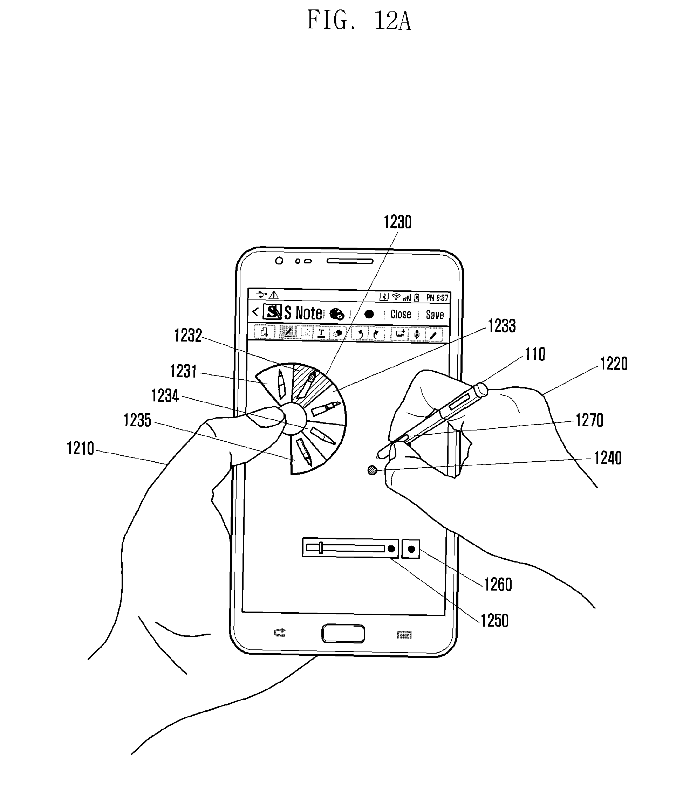

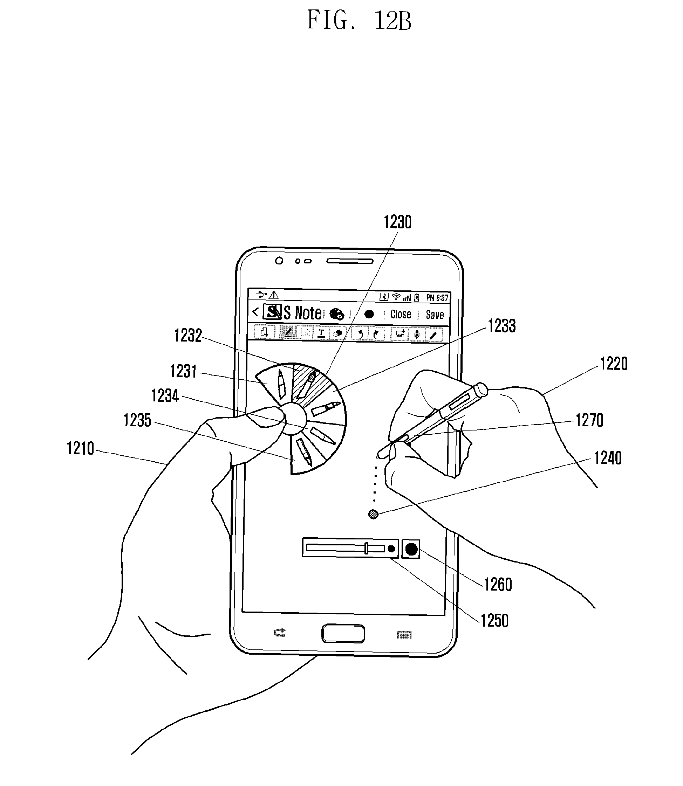

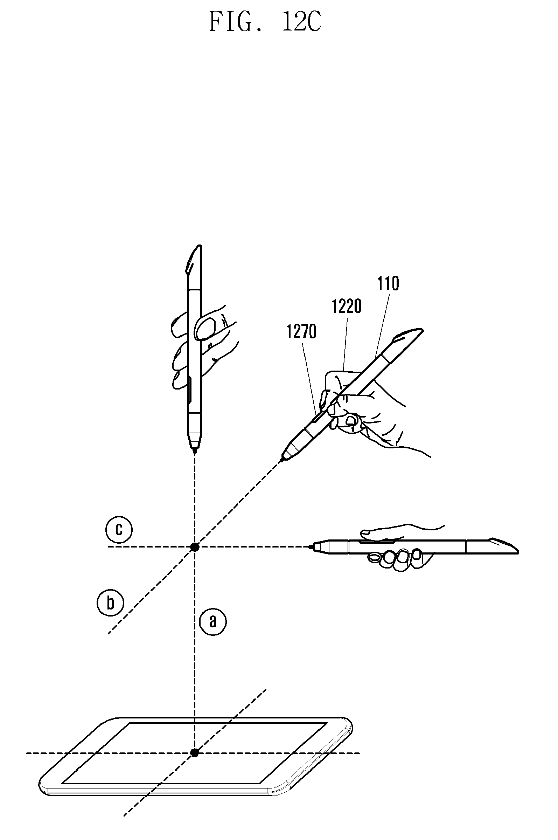

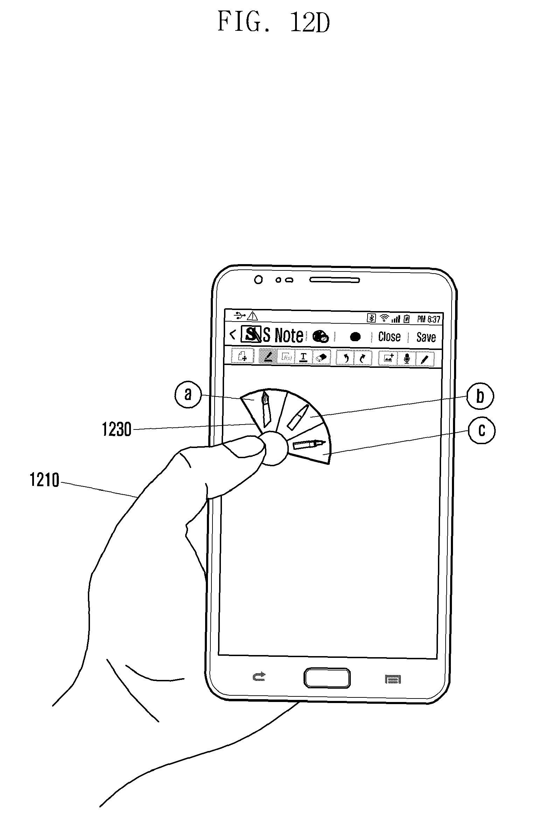

FIGS. 12A, 12B, 12C, and 12D are example screens illustrating operations of FIG. 11.

Referring to FIG. 12A, the electronic device 100 is executing an application in conjunction with the electronic pen 110. The electronic device 100 receives a first input signal (touch signal) through a user's finger 1210. If user's touch input is maintained for more than a predetermined time, the electronic device 100 displays electronic pen setting information 1230. The electronic pen setting information 1230 is at least one of pen tools 1231, 1232, 1233, 1234, and 1235. While maintaining the first input signal, the electronic device 100 receives an input from the user to select a pen tool 1232 from the electronic pen setting information 1230. The electronic device 100 receives the input for selecting a pen tool 1232 as a second input signal. The electronic device 100 can receive a hovering input of electronic pen 110 from the user while pressing a function button 1270 of the electronic pen 110. If the hovering input is received while the first input signal is maintained, the electronic device 100 can display a pen thickness adjustment window 1250 for adjusting a hovering point 1240 and thickness of pen tool 1232, and a pen thickness preview window 1260 showing the adjustment of pen thickness in real time. The operation of adjusting the thickness of pen tool 1232 is performed as an additional function of selecting a pen tool 1232 according to the second input signal. The electronic device 100 can perform the additional function of adjusting a pen thickness by identifying a distance between the tip of electronic pen 110 and the touch screen 140 while the user pressed the function button 1270 of electronic pen 110.

Referring to FIG. 12B, the electronic device 100 identifies that the distance between the tip of electronic device 100 and the touch screen 140 is increased while the user pressed the function button 1270 of electronic pen 110. The electronic device 100 can automatically change the pen thickness adjustment window 1250 corresponding to the distance between the electronic pen 110 and the touch screen 140, and change a pen thickness displayed in the pen thickness preview window 1260. The electronic device 100 may store information of distance between the tip of electronic pen 110 and the touch screen 140 in the memory 130 corresponding to pen tool thickness information. The electronic device 100 identifies the distance between the electronic pen 110 and the touch screen 140 through the sensor module 120, and can perform an additional function by mapping the identified distance onto stored distances.

Referring to FIGS. 12C and 12D, examples of the additional functions are illustrated. The electronic device 100 receives a touch and hold input signal of which a user's finger 1210 touches the touch screen for more than a predetermined time. The electronic device 100 displays a pen tool menu 1230 of electronic pen 110 according to the first input signal (touch and hold) that is maintained for more than a predetermined time. While the touch input of user's left finger 1210 is maintained, the electronic device 100 receives a hovering input of electronic pen 110 held by the user's right hand 1220. Here, the hovering input may be a second input signal. If a second input signal (hovering input of electronic pen) is received while maintaining the first input signal (finger touch), the electronic device 100 can perform a function related to the pen tool menu 1230 of electronic pen 110. Although not shown in the drawings, the function related to the pen tool menu 1230 may perform operations of changing the pen tool menu 1230 to a different color or blinking the pen tool menu 1230. The operations of changing the pen tool menu 1230 to a different color or blinking the pen tool menu 1230 may mean performing an additional function according to an additional input signal.

The electronic device 100 can identify an inclination of the electronic pen 110 by using the sensor module 120. If the inclination of electronic pen 110 changes while maintaining the hovering input of electronic pen 110 as a second input signal, the electronic device 100 can perform an additional function according to the changed inclination of electronic pen 110. As shown in the drawing, the additional function may be an operation of changing pen tools (a), (b), and (c) in the pen tool menu 1230. For example, if the electronic pen 110 is located at (a) of FIG. 12C (i.e., if the electronic pen 110 is located perpendicular to an extended line from a specific point of the electronic device 100) while the second input signal (hovering input of electronic pen 110) is maintained, the electronic device 100 can automatically select pen tool (a) as shown in FIG. 12D. As another example, if the electronic pen 110 is located at (b) of FIG. 12C (i.e., if the electronic pen 110 is located at 45 degree from an extended line from a specific point of the electronic device 100) while the second input signal (hovering input of electronic pen 110) is maintained, the electronic device 100 can automatically select pen tool (b) as shown in FIG. 12D. As further another example, if the electronic pen 110 is located at (c) of FIG. 12C (i.e., if the electronic pen 110 is located at 0 degree from an extended line from a specific point of the electronic device 100) while the second input signal (hovering input of electronic pen 110) is maintained, the electronic device 100 can automatically select pen tool (c) as shown in FIG. 12D. The identifying the inclination of electronic pen 110 may be performed in various methods besides the above examples. For example, the electronic device 100 may set a screen position normally used by a user as a base inclination or base angle. The electronic device 100 can identify the inclination of electronic pen 110 according to the base inclination or base angle. For this, the electronic pen 110 may include a proper circuit module.

The electronic device 100 can store information of selecting a specific pen tool according to a specific inclination (angle) of electronic pen 110 in the memory 130. Further, the electronic device 100 can pre-store information of executing various functions according to a specific inclination of electronic pen 110 in the memory 130.

According to an embodiment of the present disclosure, while the pen tool changes according to the inclination of electronic pen 110, the electronic device 100 can determine the changed pen tool by receiving an additional input of pressing/releasing a function button 1270 of electronic pen 110. For this, the electronic device 100 can predetermine additional functions according to the inclination of electronic pen 110 and store them in the memory 130. Further, the electronic device 100 can perform various functions by combining inclination information of electronic pen 110 and information of pressing/releasing the function button 1270 of electronic pen 110.

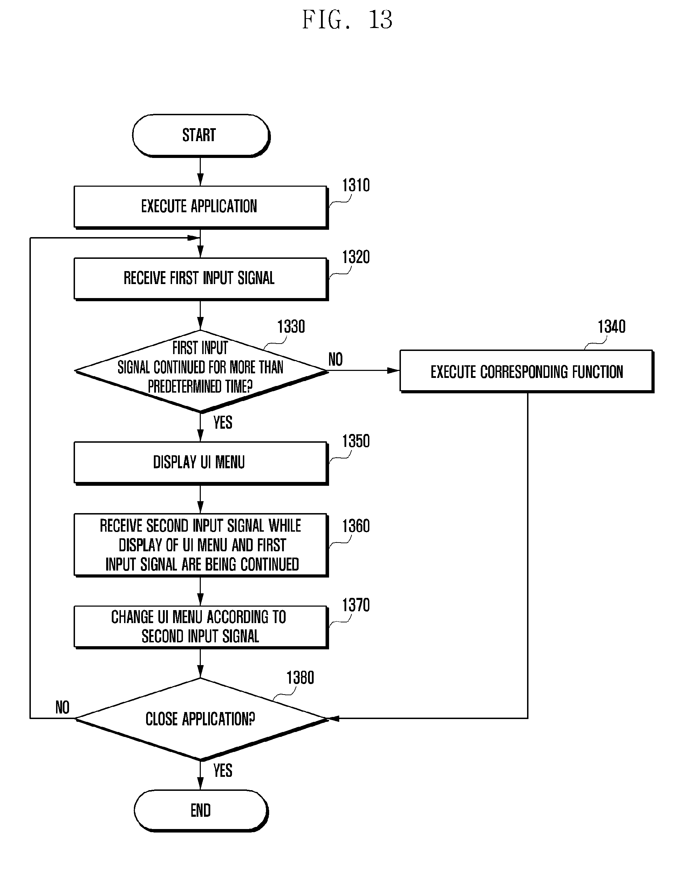

FIG. 13 is a flowchart illustrating a method for providing an input interface in an electronic device according to an embodiment of the present disclosure.

Referring to FIG. 13, according to an embodiment of the present disclosure, the electronic device 100 executes an application at operation 1310. The application may include various application usable by the electronic pen 110.

According to an embodiment of the present disclosure, the electronic device 100 receives a first input signal from a user at operation 1320. The first input signal may be a touch input signal or electronic-pen-based input signal.

According to an embodiment of the present disclosure, the electronic device 100 identifies whether the received first input signal is maintained for more than a predetermined time at operation 1330. Namely, the electronic device 100 can identify a touch and hold input of which the first input signal is maintained for more than a predetermined time.

If the received first input signal is not maintained for the predetermined time at operation 1330, the electronic device 100 performs a function corresponding to the input signal at operation 1340. For example, the electronic device 100 can perform a function of changing a display of touch point in an application related to the electronic pen 110. After performing the corresponding function, the electronic device 100 proceeds to operation 1380 and receives a user input to determine to close the application.

If the received first input signal is maintained for more than a predetermined time at operation 1330, the electronic device 100 displays a UI menu corresponding to the first input signal in the touch screen 140 at operation 1350. For example, the electronic device 100 can display the UI item if the touch input signal is received from the user and maintained for more than a predetermined time. The UI menu may include various setting menus related to the electronic pen 110.

According to an embodiment of the present disclosure, the electronic device 100 receives a second input signal while the display of UI menu and the first input signal are continued at operation 1360. The second input signal may be a touch input signal or electronic-pen-based input signal.

According to an embodiment of the present disclosure, the electronic device 100 executes a function related to the UI menu according to the second input signal at operation 1370. As an example of function related to the UI menu, the electronic device 100 can select a color from a pen tool color menu displayed according to the first input signal. As another example of function related to the UI menu, the electronic device 100 can display other colors that are not initially shown by the pen tool color menu according to the first input signal. As further another example of function related to the UI menu, the electronic device 100 can change the pen tool color menu displayed according to the first input signal to a pen tool setting menu.

According to an embodiment of the present disclosure, the electronic device 100 receives a user input to determine to close the corresponding application at operation 1380. If the closing of corresponding application is not determined, the electronic device 100 proceeds back to operation 1320 and receives the first input signal again from the user. If the closing of corresponding application is decided, the electronic device 100 can close the corresponding application.

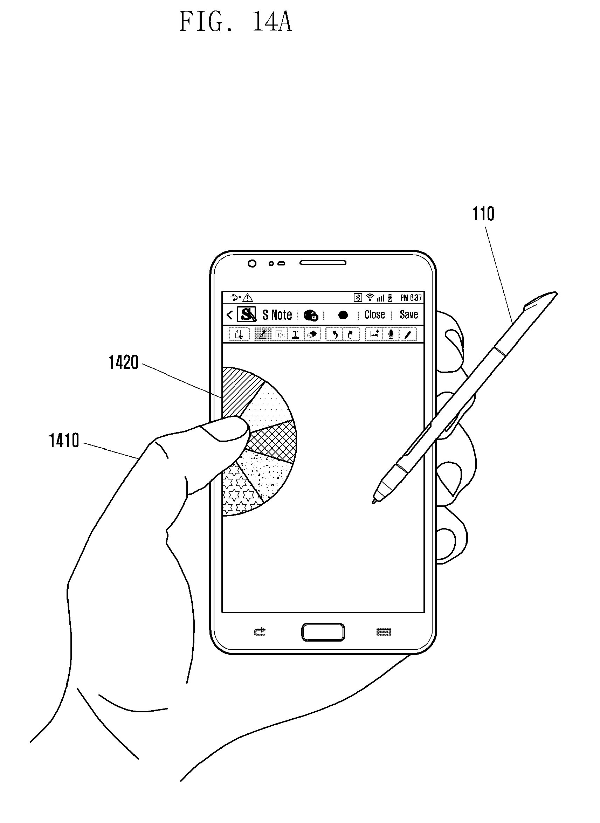

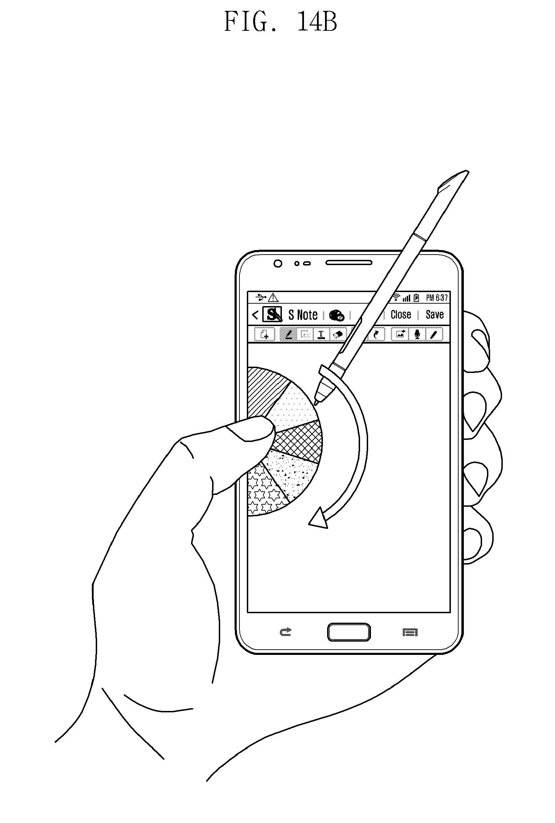

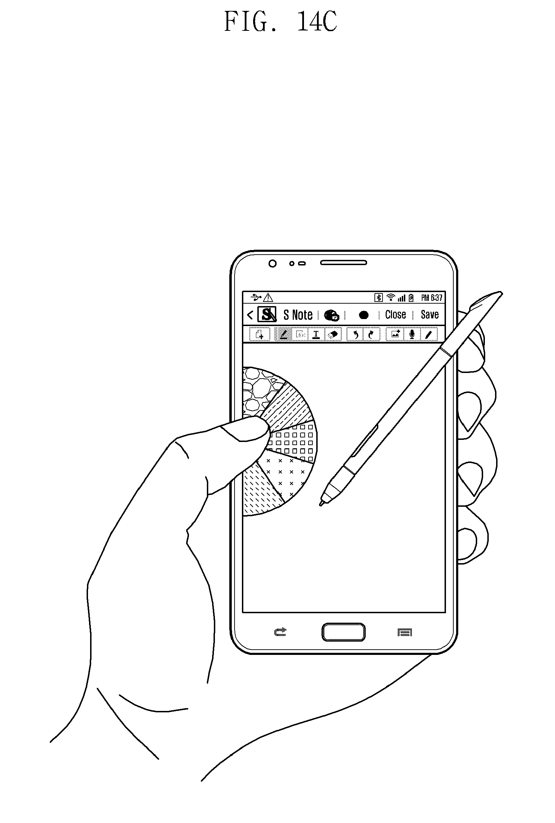

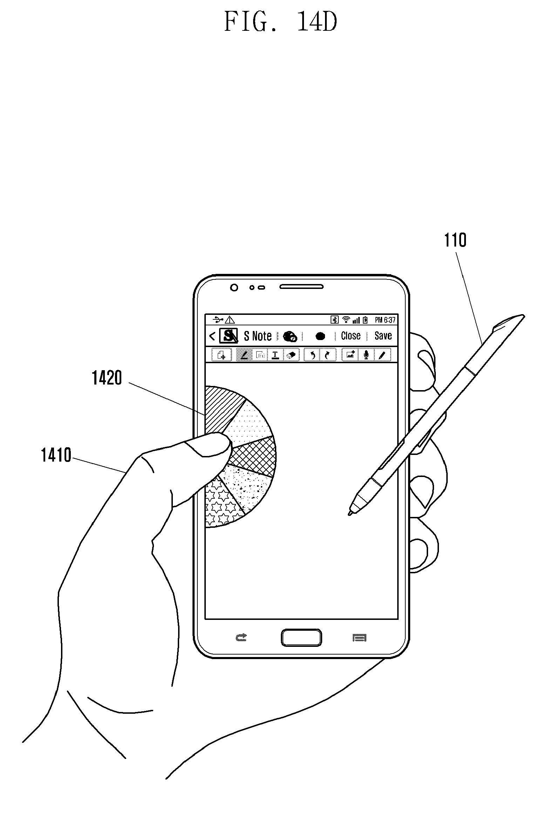

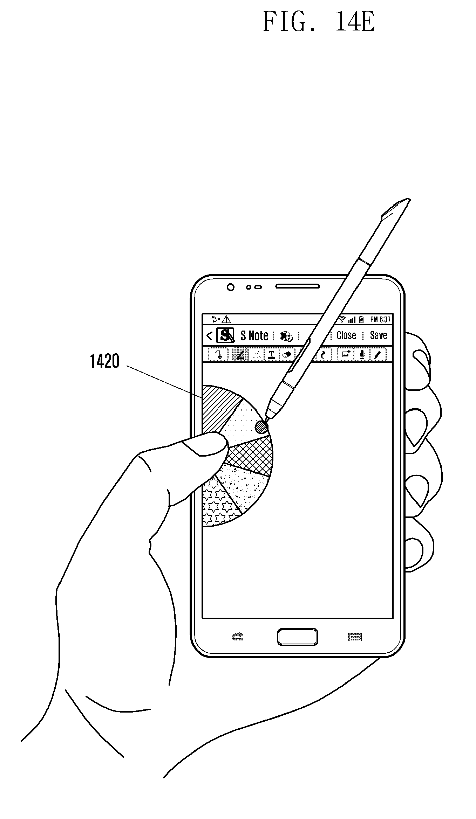

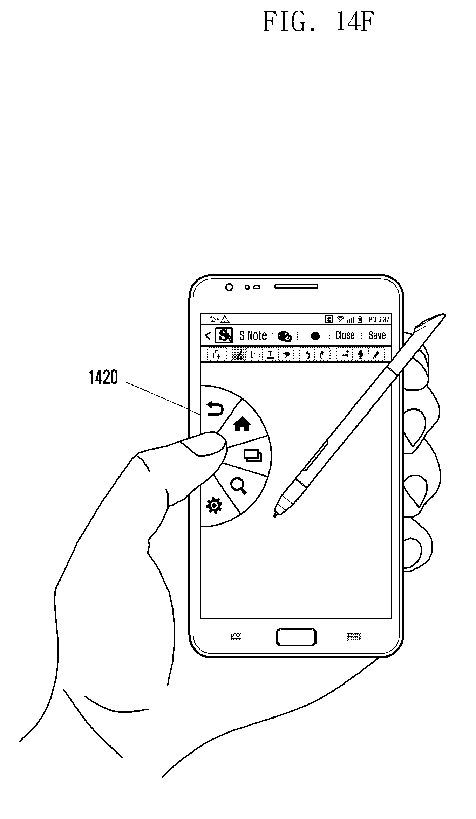

FIGS. 14A, 14B, 14C, 14D, 14E, and 14F are example screen illustrating operations of FIG. 13.

Referring to FIGS. 14A, 14B, and 14C, the electronic device 100 is in a state that an application related to the electronic pen 110 is being executed. The electronic device 100 receives a touch signal (first input signal) of user's finger 1410, and displays a pen tool color menu 1420 because the touch signal is maintained for more than a predetermined time. The pen tool color menu 1420 is one of UI menus according to the embodiment of the present disclosure.

While the touch signal is maintained, the electronic device 100 receives a drag input signal of the electronic pen 110. The drag input signal of electronic pen 110 is a second input signal received from the user. The electronic device 100 can change the pen tool color menu 1420 according to the drag input signal of electronic pen 110 in a panning method. According to the motion illustrated in FIG. 14B, the electronic device 100 can change the current pen tool color shown. The electronic device 100 can partially or totally change the pen tool colors displayed before receiving the drag input signal of electronic pen 110 to new pen tool colors.

Referring to FIGS. 14D, 14E, and 14F, another example of the operation of FIG. 13 is illustrated.

The electronic device 100 executes an application in conjunction with the electronic pen 110. The electronic device 100 receives a touch signal (first input signal) of user's finger 1410, and displays a pen tool color menu 1420 because the touch signal is maintained for more than a predetermined time. The pen tool color menu 1420 is one of UI menus according to the embodiment of the present disclosure.

The electronic device 100 receives a touch input signal of electronic pen 110 while the finger touch signal is maintained. The touch input signal of electronic pen 110 is a second input signal received from the user. The electronic device 100 can change the pen tool color menu 1420 displayed according to the touch input signal of electronic pen 110 in a toggling method. Referring to FIG. 14F, the electronic device 100 can change the current pen tool color to a pen tool setting menu. With reference to FIGS. 14A, 14B, and 14C, the electronic device 100 can change the pen tool color menu to a pen tool menu. The pen tool color menu and the pen tool menu are examples, and thereby the present disclosure is not limited to these examples. For example, various embodiments of the present disclosure such as changing a frequently used pen tool color menu to a pen menu can be implemented.

According to various embodiments of the present disclosure, a function frequently used for an electronic-pen-based application can be rapidly and intuitively performed by displaying the function related to electronic pen attribute based on at least two different input signals.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a touch screen configured to receive a first input signal and a second input signal, the first input signal and the second input signal being based on different input methods; and
a controller configured to:
control the touch screen to display an event item related to an attribute of electronic pen if the first input signal is continued for more than a predetermined time, and
display a function related to the event item based on the second input signal if the second input signal is received while the display of event item and the first input signal are being continued.

2. The electronic device of claim 1, wherein the first input signal corresponds to an input signal of capacitive type based on a capacitance change and the second input signal corresponds to an input signal of an electromagnetic induction type based on a magnetic field change.

3. The electronic device of claim 1, wherein the controller is configured to:
identify if a hand gripping the electronic device is a right hand or a left hand when the electronic device is gripped, and
control the touch screen to receive the first input signal in an area of the touch screen based on the grip information.

4. The electronic device of claim 1, wherein the controller is configured to:
receive a hovering input signal based on an electromagnetic induction method, and
control the touch screen to receive the first input only when the reception of hovering input signal is continued for a predetermined time.

5. The electronic device of claim 3, further comprising a sensor,
wherein the controller identifies the hand gripping the electronic device is the right hand or left hand based on at least one of the touch screen and the sensor.

6. The electronic device of claim 1, wherein the controller controls the touch screen to display an additional function concurrently with the displayed function based on at least one of pressing/releasing a button included in the electronic pen, inclination of the electronic pen, location of projecting the electronic pen on the touch screen, movement speed of the electronic pen, acceleration of the electronic pen, and distance between the electronic pen and the touch screen.

7. The electronic device of claim 6,
wherein the additional function is for changing a magnification at least one of a text or an image displayed in the touch screen, and
wherein the changing of the magnification comprises configuring the controller to change the magnification based on at least one of the activation/deactivation of a button of the electronic pen, inclination of the electronic pen, location of projecting the electronic pen on the touch screen, movement speed of the electronic pen, acceleration of the electronic pen, and distance between the electronic pen and the touch screen.

8. The electronic device of claim 1,
wherein the event item comprises a user interface (UI) menu for setting of the electronic pen, and
wherein the controller is configured to change the UI menu according to the second input signal.

9. The electronic device of claim 8,
wherein only a first partial area of the UI menu is displayed on the touch screen, and
wherein the controller is configured to control the touch screen to display a second partial area of the UI menu in the touch screen according to the second input signal.

10. The electronic device of claim 8, wherein the controller is further configured to control the touch screen to switch the displayed UI menu to another UI menu in a toggling method based on the second input signal or to switch the displayed UI menu to another UI menu in a panning method based on the second input signal.

11. A method for providing an input interface in an electronic device, the method comprising:
receiving a first input signal;
displaying an event item related to an attribute of electronic pen in a touch screen if the first input signal is received for more than a predetermined time;
receiving a second input signal after the first input signal is received for more than the predetermined time; and
displaying a function related to the event item in response to the received second input signal,
wherein the first input signal and the second input signal are received via different input methods.

12. The method of claim 11, wherein the first input signal corresponds to input signal of a capacitive type based on a capacitance change and the second input signal corresponds to an input signal of an electromagnetic induction type based on a magnetic field change.

13. The method of claim 11, further comprising identifying if a hand gripping the electronic device the right hand or the left hand when the electronic device is gripped, wherein the first input signal is received in an area of the touch screen based on the grip information.

14. The method of claim 11, further comprising receiving a hovering input signal of electronic pen, wherein the first input signal is received only when the hovering input signal is continued for a predetermined time.

15. The method of claim 13, wherein the identifying of if the hand gripping the electronic device is the right hand or the left hand is performed by using at least one of the touch screen and a sensor.
